# EUROPÄISCHE PATENTSCHRIFT

(11) **EP 1 239 180 B1**
(45) Veröffentlichungstag und Bekanntmachung des Hinweises auf die Patenterteilung: **21.12.2005**
(21) Anmeldenummer: 02004302.2
(22) Anmeldetag: 28.02.2002
(51) Int. Cl.: B62D 1/04, B60R 21/20, B62D 7/22, F16F 7/104

(54) **Vorrichtung zur Dämpfung von Schwingungen in einem Lenkrad**
Apparatus for damping the vibrations in a steering wheel
Appareil pour amortir les vibrations dans un volant de direction

(30) Priorität: 08.03.2001 DE 20104043 U
(43) Veröffentlichungstag der Anmeldung: 11.09.2002
(73) Patentinhaber: TRW Automotive Safety Systems GmbH, 63743 Aschaffenburg (DE)
(72) Erfinder: Kreuzer, Martin, 63839 Kleinwallstadt (DE); Bieber, Udo, 63843 Niedernberg (DE); Lorenz, Christian, 63849 Leidersbach 3 (DE)
(74) Vertreter: Kitzhofer, Thomas

(56) Entgegenhaltungen:
- EP-A- 1 162 124
- DE-A- 19 717 692
- DE-A- 19 908 915
- DE-C- 19 502 030
- DE-U- 20 105 733
- US-A- 5 509 641
- US-A- 5 713 438
- PATENT ABSTRACTS OF JAPAN vol. 017, no. 697 (M-1532), 20. Dezember 1993 (1993-12-20) & JP 05 238394 A (SUZUKI MOTOR CORP), 17. September 1993 (1993-09-17)
- PATENT ABSTRACTS OF JAPAN vol. 015, no. 212 (M-1118), 30. Mai 1991 (1991-05-30) & JP 03 057770 A (NIPPON PLAST CO LTD), 13. März 1991 (1991-03-13)
- PATENT ABSTRACTS OF JAPAN vol. 014, no. 228 (M-0973), 15. Mai 1990 (1990-05-15) & JP 02 057475 A (NIPPON PLAST CO LTD), 27. Februar 1990 (1990-02-27)

## Beschreibung

Die Erfindung betrifft eine Vorrichtung zur Dämpfung von Schwingungen in einem Lenkrad, nach dem Oberbegriff des Anspruchs 1.

Schwingungen des Lenkrads werden vom Fahrer als störend empfunden. Das Vibrieren eines Lenkrades ist von verschiedenen Parametern beeinflußt. Längsnachgiebigkeiten der Hinterachsaufhängung wandeln die infolge einer Unwucht der Räder an der Hinterachse eingeleiteten Schwingungen zu einer Horizontalschwingung der Karosserie und damit zu einer Vertikalschwingung des Lenkrades um. Motorschwingungen, speziell bei Dieselfahrzeugen, führen oft im Leerlauf zu Vibrationen am Lenkrad. Um die in ein Lenkrad eingeleiteten Schwingungen zu dämpfen, wird oft eine der Bewegungsrichtung entgegengesetzt gerichtete Kraft aufgebracht. Hierzu werden Feder-Masse-Systeme, die auch Schwingungstilger genannt werden, eingesetzt.

Aus der US-A-5 713 438 ist ein gattungsgemäßes schwingungsdämpfendes System bekannt, bei welchem ein Masseelement aktiv bewegt wird, um einer als störend empfundenen Vibration entgegenzuwirken. Hierbei wird die Vibration, die von der Störquelle erzeugt wird, wie auch die an der zu dämpfenden Vorrichtung auftretende Schwingung jeweils durch einen Sensor aufgenommen. Abhängig von den Signalen der Sensoren wird ein Steuerungssignal erzeugt, welches an einen Aktuator angelegt wird. Dieser bewirkt daraufhin eine Bewegung des Masseelements, welches der Vibration entgegenwirkt und diese dämpft.

Die EP-A-1 162 124 beschreibt eine aktiv gedämpfte Lenkradbaugruppe, bei der an einem Bauteil eine Dämpfungsmasse, beispielsweise aus Blei sowie Dämpfungselemente in Form von Piezoelementen befestigt sind. Ein Beschleunigungssensor ist so angeordnet, daß er die zu dämpfenden Schwingungen erfaßt. Das Ausgangssignal des Sensors wird verstärkt, um 180° phasenverschoben und den Dämpfungselementen zugeführt. Dies führt letztendlich zu einer Schwingung der Dämpfungsmasse, die der zu dämpfenden Schwingung entgegenwirkt.

Dokument JP-5238394 A offenbart eine Vorrichtung zur Dämpfung von Schwingungen in einem Lentrad gemäß dem Oberbegriff des Anspruchs 1.

Es sind Schwingungstilger bekannt, welche aus gummielastisch gelagerten Metallmassen bestehen, wobei diese Schwingungstilger auf bestimmte Frequenzen abgestimmt sind. In der Regel sind derartige Schwingungstilger an der Lenkradnabe befestigt. Als Tilgermasse kann auch ein Gasgenerator eines im Lenkrad angeordneten Gassackmoduls eingesetzt werden oder das Gassackmodul selbst wird zur Schwingungsdämpfung herangezogen.

So erfolgt z.B. in der EP-A 0 827 878 die Dämpfung der Lenkradschwingungen über konzentrisch um das Gassackmodul angebrachte Federn, die sich am Lenkradkorpus abstützen.

Ein wesentlicher Nachteil der beschriebenen Schwingungstilger liegt darin, daß sie nur auf eine Frequenz abgestimmt sind. Aufgrund der verschiedenen Fahrbahneinflüsse und der veränderbaren Motorschwingungen bei unterschied-lichen Drehzahlen ändert sich die Frequenz der Lenkradschwingungen aber ständig. Ein Großteil der Lenkradschwingungen bleibt daher ungedämpft.

Aufgabe der Erfindung ist es, die Schwingungsdämpfung eines Lenkrades zu verbessern.

Dies wird durch die Merkmale des Anspruchs 1 erreicht, gemäß denen eine mit dem Dämpfungsmittel gekoppelte, elektrische Steuereinheit vorgesehen ist, die die mechanischen Schwingungseigenschaften der Vorrichtung so verändern kann, daß unterschiedliche Schwingungsfrequenzen gedämpft werden können. Über die mechanischen Schwingungseigenschaften der Vorrichtung wird deren Schwingungsfrequenz beeinflußt, so daß die Schwingungsfrequenz der Vorrichtung an die aktuelle Schwingungsfrequenz des Lenkrades angepaßt werden kann, um z.B. eine Resonanztilgung zu erreichen. Die Vorrichtung, im folgenden auch Schwingungstilger genannt, kann also flexibel auf die gerade aktuelle Schwingungsfrequenz des Lenkrades abgestimmt werden, so daß zeitlich veränderlich unterschiedliche Schwingungen gedämpft werden können.

In einer bevorzugten Ausführungsform der Erfindung ist das Dämpfungsmittel so ausgelegt, daß sich die mechanischen Schwingungseigenschaften der Vorrichtung durch Zufuhr elektrischer Energie zum Dämpfungsmittel verändern lassen. Die Zufuhr elektrischer Energie kann durch Herstellen eines Stromflusses, durch Anlegen einer Spannung oder durch Anlegen eines elektrischen Feldes geschehen. Die Zufuhr elektrischer Energie läßt sich von der elektrischen Steuereinheit einfach und flexibel steuern, so daß der Schwingungstilger schnell und stufenlos in seiner Schwingungsfrequenz verstellt werden kann.

Vorzugsweise erhält die Steuereinheit durch Koppelung mit einem Sensor Daten über aktuelle Schwingungen des Lenkrads, so daß die Schwingungsfrequenz des Schwingungstilgers stets auf die aktuelle Schwingungsfrequenz des Lenkrades abgestimmt werden kann.

Die Änderung der mechanischen Schwingungseigenschaften wird vorzugsweise dadurch erreicht, daß das Dämpfungsmittel ein Material enthält, das bei Zufuhr elektrischer Energie seine mechanischen Eigenschaften ändert. Auf diese Weise kann auf mechanisch verstellbare Vorrichtungen verzichtet werden, was den Aufbau der Vorrichtung vereinfacht und seine Lebensdauer erhöht. Das Material ist bevorzugt ein elektrisch leitfähiges Elastomer. Das Elastomer enthält vorteilhaft elektrisch leitfähige Partikel, z.B. Ruß oder Metallpartikel. Besonders vorteilhaft können magnetisch polarisierbare Partikel eingesetzt werden. Durch einen Stromfluß durch das Elastomer läßt sich die Lage solcher Partikel verändern, wobei Platzwechselreaktionen auftreten, so daß sich die mechanischen Eigenschaften der Polymermatrix beeinflussen lassen.

In einer anderen bevorzugten Ausführungsform der Erfindung ist das Material eine elektrorheologische Flüssigkeit. Die Viskosität derartiger Flüssigkeiten kann über das Anlegen eines elektrischen Feldes in einem weiten Bereich beeinflußt werden, wodurch sich die Schwingungsfrequenz des Schwingungstilgers sehr flexibel verändern läßt.

In einer weiteren bevorzugten Ausführungsform der Erfindung enthält das Dämpfungsmittel einen Bimetallstreifen. Bei einem Stromdurchfluß erwärmt sich der Bimetallstreifen und ändert seine Krümmung und damit seine Schwingungsfrequenz. Bimetallstreifen reagieren sehr schnell auf eine Temperaturänderung, so daß sich durch einen Stromdurchfluß eine schnelle und genaue Abstimmung der Schwingungsfrequenz erreichen läßt.

In einer weiteren bevorzugten Ausführungsform der Erfindung enthält das Dämpfungsmittel einen den Dämpfungskörper umgebenden Magneten. Der Magnet ist bevorzugt ein Elektromagnet.

Das Material des Dämpfungskörpers kann ein elektrisch leitfähiges Elastomer sein. Die Veränderung der Schwingungseigenschaften kann in diesem Fall entweder dadurch erfolgen, daß der Stromfluß im umgebenden Elektromagneten verändert wird oder indem der Stromfluß innerhalb des vorzugsweise ringförmigen Dämpfungskörpers verändert wird.

In einer vorteilhaften Weiterbildung der Erfindung enthält der Dämpfungskörper eine magnetorheologische Flüssigkeit. Die Viskosität einer solchen Flüssigkeit ändert sich je nach der Stärke des Magnetfelds, in dem sich die Flüssigkeit befindet. Auf diese Weise kann über die Änderung des Stromflusses in dem den Dämpfungskörper umgebenden Elektromagneten eine schnelle und einfache Änderung der Schwingungsfrequenz der Vorrichtung erzielt werden.

Vorzugsweise erfüllt ein Gasgenerator eines im Lenkrad angeordneten Gassackmoduls die Aufgabe der Tilgermasse. Auf diese Weise muß keine weitere Masse im Lenkrad angeordnet werden, wodurch das Gewicht des Lenkrads unnötig vergrößert werden würde.

Weitere Vorteile und Merkmale der Erfindung ergeben sich aus der nachfolgenden Beschreibung mehrerer Ausführungsbeispiele, mit Bezug auf die beigefügten Zeichnungen. In diesen zeigen:
Fig. 1 einen Schnitt durch ein Lenkrad mit einer erfindungsgemäßen Vorrichtung gemäß einer ersten und einer zweiten Ausführungsform, die in der rechten bzw. linken Hälfte der Zeichnung dargestellt sind;
Fig. 2 einen Schnitt durch ein Lenkrad mit einer erfindungsgemäßen Vorrichtung gemäß einer dritten Ausführungsform;
Fig. 3 einen Schnitt durch ein Lenkrad mit einer erfindungsgemäßen Vorrichtung nach einer vierten Ausführungsform;
Fig. 4 den Ausschnitt Z aus Fig. 3 in vergrößerter Darstellung; und
Fig. 5 einen Schnitt durch ein Lenkrad mit einer erfindungsgemäßen Vorrichtung nach einer fünften Ausführungsform.

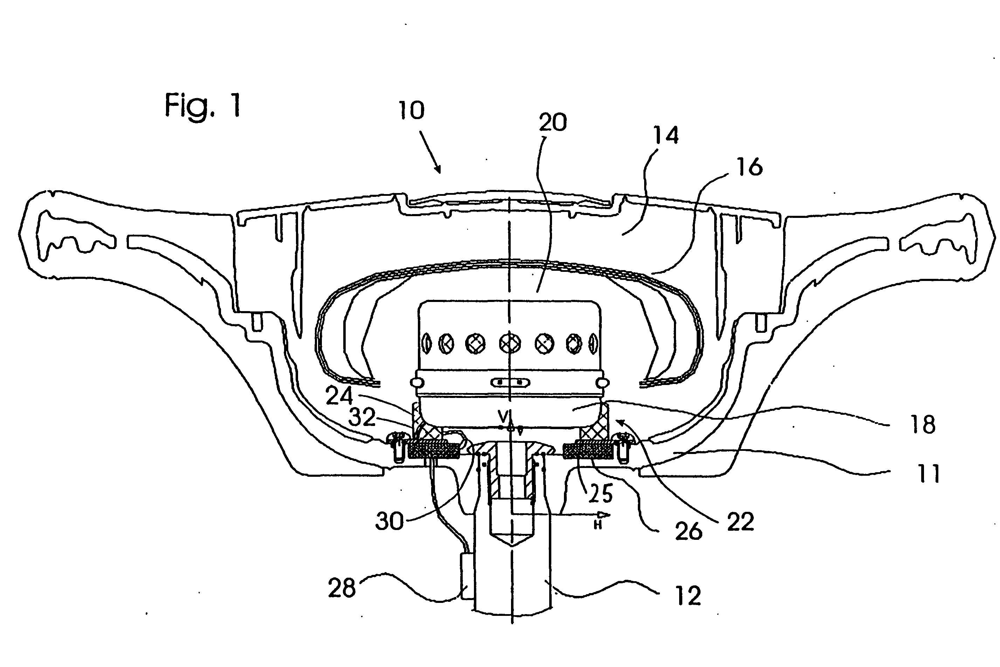

Figur 1 zeigt ein Lenkrad 10, das auf einer Lenksäule 12 auf bekannte Weise befestigt ist. Im Inneren des Lenkrads 10 ist ein Gassackmodul 14 mit einem Gassack 16 und einem Gasgenerator 18 angeordnet. Der Gasgenerator 18 oder, in einer Variante, das gesamte Gassackmodul 14, bildet eine Tilgermasse eines Schwingungstilgers 20, der neben der Tilgermasse ein mit dem Lenkradskelett 11 verbundenes Dämpfungsmittel 22 aufweist und der eine Vorrichtung zur Dämpfung von Schwingungen in einem Lenkrad bildet.

Das Dämpfungsmittel 22 enthält einen Dämpfungskörper 24, der mit einem am Lenkradskelett 11 befestigten Blech 25 und mit der Tilgermasse verbunden ist. Der Schwingungstilger 20 enthält außerdem eine elektrische Steuereinheit 26, die mit dem Dämpfungsmittel 22 gekoppelt ist.

Die Steuereinheit 26 ist vorzugsweise mit einem Beschleunigungssensor 28 verbunden, der an der Lenksäule 12 angeordnet ist und deren Schwingungen mißt und diese Daten an die Steuereinheit 26 übermittelt.

Der Schwingungstilger 20 dient hauptsächlich zum Dämpfen von vertikalen Lenkradschwingungen, in Richtung der in der Zeichnung dargestellten Achse V, bewirkt aber auch eine Verringerung der Schwingungskomponenten in Richtung der dargestellten Achse H.

In einer ersten Ausführungsform der Erfindung (rechte Zeichnungshälfte) enthält der Dämpfungskörper 24 ein elektrisch leitfähiges Elastomer, das zum Beispiel Rußpartikel oder Metallpartikel, die vorteilhaft magnetisch polarisierbar sein können, enthält. Der Dämpfungskörper 24 ist vorzugsweise ringförmig. Über Leitungen 30 ist der Dämpfungskörper 24 mit der Steuereinheit 26 verbunden.

Das Elastomer ist so ausgewählt, daß sich bei Anlegen einer elektrischen Spannung an den Dämpfungskörper 24 bzw. bei Einstellung eines elektrischen Stromflusses durch den Dämpfungskörper 24 die Härte und damit die Schwingungseigenschaften des Dämpfungskörpers 24 ändern.

Die Einstellung der Zufuhr elektrischer Energie kann aufgrund vorher abgeleiteter Korrelationen erfolgen.

Die Funktionsweise des Schwingungstilgers gemäß der ersten Ausführungsform 20 ist die folgende. Der Beschleunigungssensor 28 an der Lenksäule 12 mißt die Frequenz der vertikalen Komponente der Lenkradschwingung. Die Steuereinheit 26 empfängt diese Daten vom Beschleunigungssensor 28 und veranlaßt eine entsprechende Zufuhr elektrischer Energie in Form von Strom, Spannung oder eines elektrischen Feldes zum Dämpfungskörper 24. Das Elastomermaterial des Dämpfungskörpers 24 verändert unter Einfluß der elektrischen Energie vorzugsweise seine Härte, so daß sich die Schwingungseigenschaften des Dämpfungskörpers 24 verändern. Auf diese Weise kann die Schwingungsfrequenz des Schwingungstilgers 20 exakt auf die aktuelle Schwingungsfrequenz des Lenkrades 10 abgestimmt werden, so daß z.B. eine Resonanztilgung erreichbar ist und die Schwingungsamplitude des Lenkrads verringert wird.

Die erforderlichen Werte für die Zufuhr elektrischer Energie werden vorzugsweise in Vorversuchen ermittelt und sind in der Steuereinheit 26 gespeichert.

In einer zweiten Ausführungsform (linke Zeichnungshälfte) sind in den Dämpfungskörper 24 Bimetallstreifen 32 eingebettet. Durch einen von der Steuereinheit 26 eingestellten Stromfluß durch den Dämpfungskörper 24 bzw. die Bimetallstreifen 32 werden die Bimetallstreifen 32 erwärmt und ändern temperaturabhängig ihre Krümmung. Dadurch kann die Eigenfrequenz des Dämpfungskörpers 24 angepaßt werden, um, wie oben beschrieben, die Lenkradschwingung zu dämpfen.

Die Bimetallstreifen 32 müssen nicht im Dämpfungskörper 24 eingebettet sein. In diesem Fall ist es jedoch wichtig, daß die Bimetallstreifen 32 sowohl mit dem Gasgenerator 18 als auch dem Lenkradskelett 11 fest verbunden sind.

In einer anderen Variante dieser Ausführungsform ist vorgesehen, daß der Dämpfungskörper 24 eine elektrorheologische Flüssigkeit enthält. Bei solchen Flüssigkeiten kann durch Anlegen eines elektrischen Feldes die Viskosität in einem weiten Bereich mit sehr kurzer Ansprechzeit verändert werden. Durch Anlegen einer Spannung an den Dämpfungskörper 24 kann demnach dessen Schwingungsfrequenz auf den jeweils erforderlichen Wert eingestellt werden.

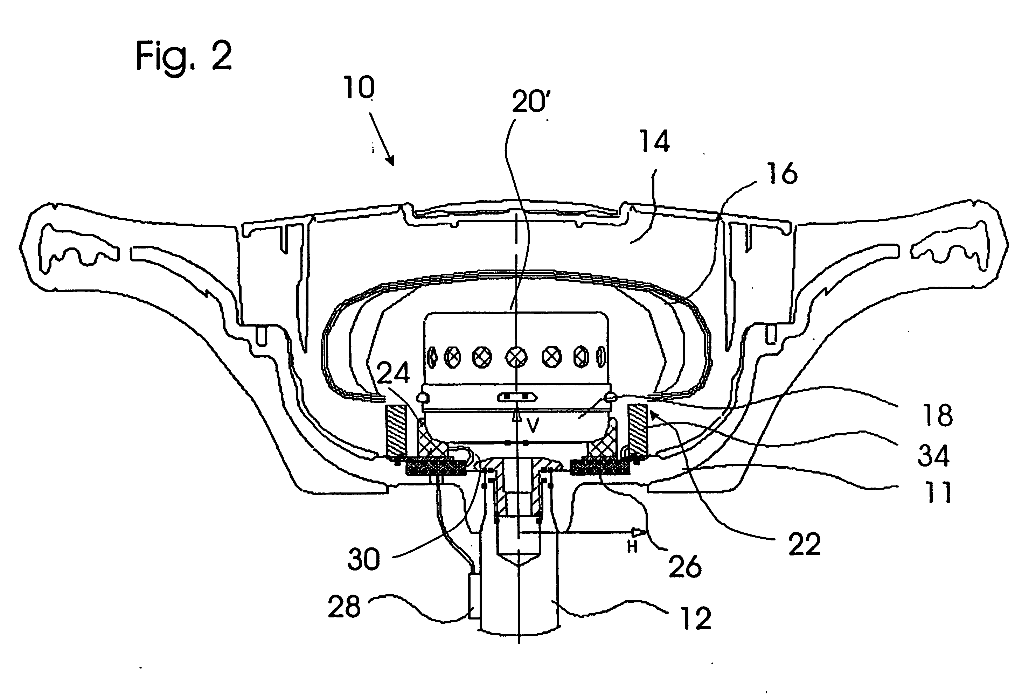

Der Schwingungstilger 20' des in Figur 2 dargestellten Lenkrads 10 unterscheidet sich von dem in Figur 1 gezeigten dadurch, daß das Dämpfungsmittel 22 einen Dämpfungskörper 24 und einen um den Dämpfungskörper 24 herum angeordneten Magneten 34 enthält.

In dieser Ausführungsform der Erfindung ist der Magnet 34 ein Elektromagnet, während der Dämpfungskörper 24 bevorzugt einen Ring aus einem elektrisch leitfähigen Elastomer enthält. Die Steuereinheit 26 verändert in Abhängigkeit von der aktuellen Schwingung des Lenkrads den Stromfluß durch den Elektromagneten und damit das in seinem Inneren herrschende elektromagnetische Feld. Die so im Dämpfungskörper 24 induzierten Ströme verändern die Schwingungsfrequenz des Schwingungstilgers 20' derart, daß, angepaßt an die aktuelle Schwingung des Lenkrads, unterschiedliche Frequenzen gedämpft werden können.

In einer Variante zu dieser Ausführungsform der Erfindung wird nicht die Feldstärke des Magnetfelds des Magneten 34 verändert, sondern der Stromfluß durch den Elastomerring des Dämpfungskörpers 24. Das so erzeugte Magnetfeld und dessen Veränderung wirken sich auf die Schwingungseigenschaften des Schwingungstilgers 20' aus, so daß eine angepaßte Dämpfung erzielt werden kann. In dieser Ausführungsform kann der Magnet 34 auch ein Permanentmagnet sein.

In einer anderen Variante zu dieser Ausführungsform der Erfindung enthält der Dämpfungskörper 24 eine magnetorheologische Flüssigkeit. Ähnlich den oben beschriebenen elektrorheologischen Flüssigkeiten ändern derartige Flüssigkeiten ihre Viskosität in Abhängigkeit vom Magnetfeld, in dem sie sich befinden. Über eine Änderung des Feldes des Elektromagneten 34 läßt sich so die Schwingungsfrequenz des Schwingungstilgers 20' einstellen.

Die Steuereinheit 26 kann auch von anderen Quellen als dem Beschleunigungssensor 28 mit Daten versorgt werden. Die Steuereinheit 26 kann außerdem zur Auslösung des Gassackmoduls ausgelegt sein.

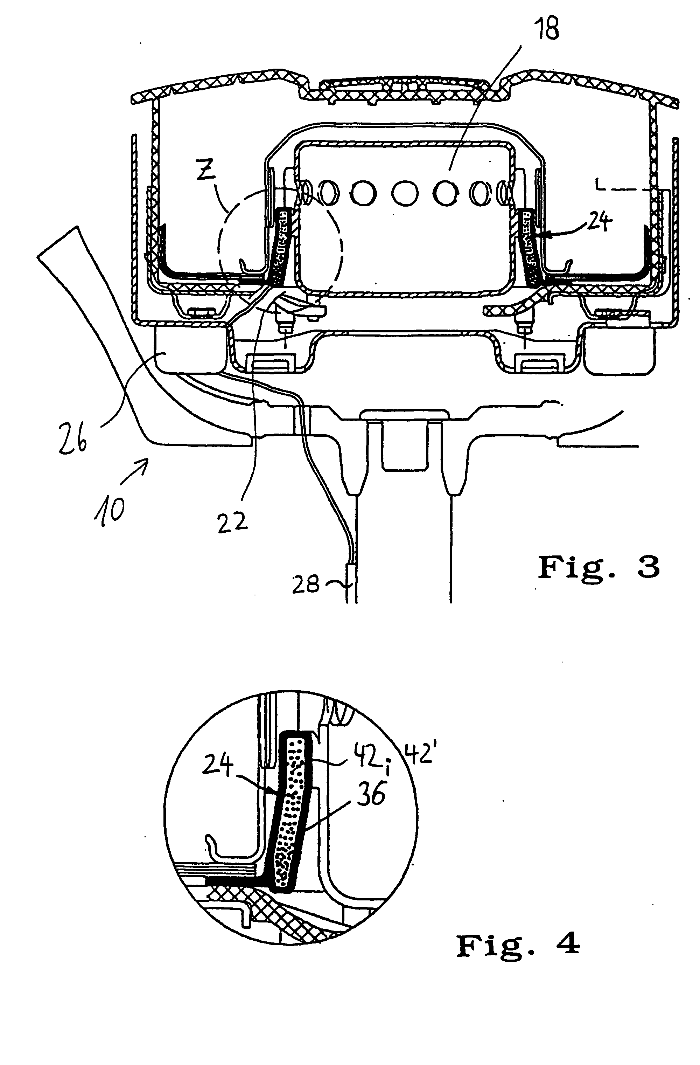

Gemäß der Ausführungsform nach Fig. 3 wird die Masse des Gasgenerators 18 zur Schwingungsdämpfung herangezogen. Hierzu enthält das Dämpfungsmittel 22 einen Dämpfungskörper 24, über den der Gasgenerator 18 mit dem Lenkrad verbunden ist.

In Figur 4 ist der Ausschnitt Z aus Figur 3 vergrößert dargestellt. Man sieht, daß der Dämpfungskörper 24 im Bereich seines oberen Randes mit dem Gasgenerator verbunden ist, während er an seinem unteren Rand eine Lippe aufweist, die im Gassack-Modul z.B. zwischen einem Luftsackhalteblech und einem Bodenelement des Moduls eingeklemmt sein kann. Das Bodenelement kann auf konventionelle Weise fest mit dem Lenkradskelett verbunden sein.

Der Dämpfungskörper 24 besteht hier aus einem ringförmigen Hohlkörper 36 aus einem elastischen Material wie z.B. einem Elastomer. Dieser Hohlkörper 36 ist mit einer elektrorheologischen Flüssigkeit 42 gefüllt.

Am Lenksäulenkopf ist ein Beschleunigungssensor 28 vorgesehen, welcher die eingehende Schwingung als resultierende Beschleunigung mißt und das Signal an eine im Lenkrad untergebrachte elektronische Steuereinheit 26 weiterleitet. Die Steuereinheit 26 beeinflußt entsprechend einer in Vorversuchen abgeleiteten Korrelationen ein elektrisches Signal zu (nicht dargestellten) Elektroden. Als Folge davon ändert die elektrorheologische Flüssigkeit ihre Viskosität, wodurch eine adaptive Dämpfung ermöglicht ist.

Durch das Abstimmen eines elektrischen Felds im Bereich des Dämpfungskörpers 24 kann die Schwingungsfrequenz des aus Gasgenerator und Dämpfungskörper bestehenden Schwingungssystems auf den jeweils erforderlichen Wert eingestellt werden.

Anstelle einer elektrorheologischen Flüssigkeit kann auch eine magnetorheologische Flüssigkeit verwendet werden. Derartige Flüssigkeiten ändern ihre Viskosität, wenn sie einem sich verändernden Magnetfeld unterliegen. Ein mit einer magnetorheologischen Flüssigkeit 42' gefüllter Dämpfungskörper 24 muß also analog zum Ausführungsbeispiel in Figur 2 mit einem Elektromagneten (hier nicht gezeigt) umgeben sein, um die erforderliche Viskositätsänderung herbeiführen zu können.

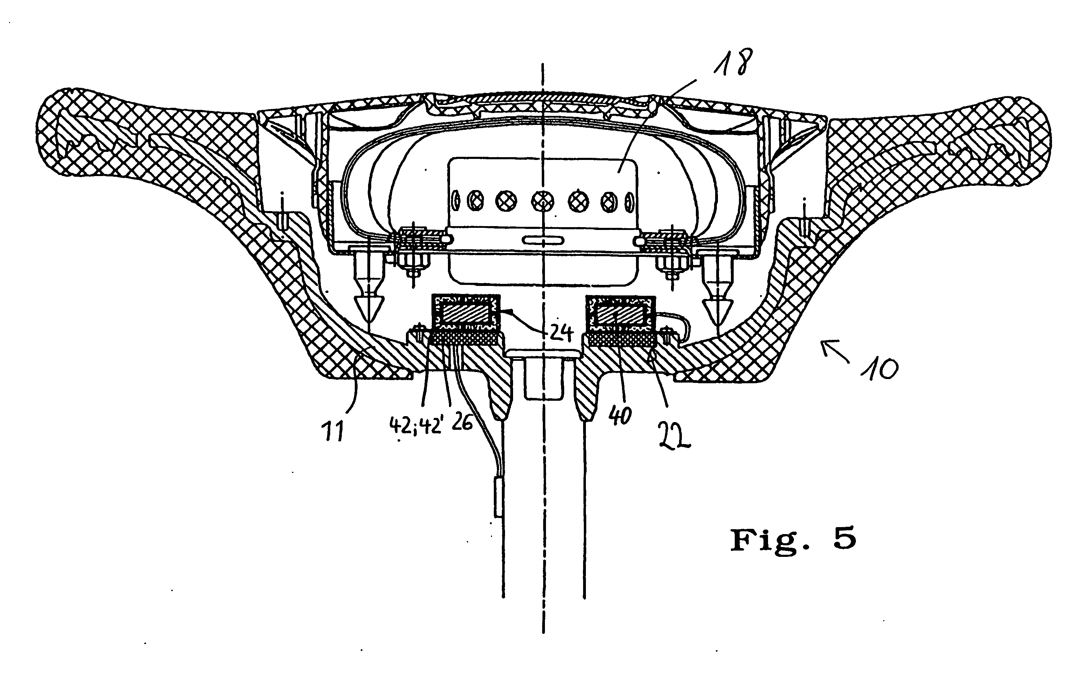

In Figur 5 ist eine Anordnung gezeigt, bei der - im Gegensatz zu den vorhergehend beschriebenen Ausführungsformen - die Masse des Gasgenerators 18 nicht unmittelbar in das Schwingungssystem mit einbezogen wird. Hier ist im Bereich der Nabe des Lenkrads 10 ein Dämpfungsmittel 22 vorgesehen, das einen in einem Dämpfungskörper 24 angeordneten Massekern 40 enthält. Der Massekern 40 kann ein ringförmiger, vorzugsweise kreisringförmiger Körper z.B. aus Metall sein, der von einer elektro- oder magnetorheologischen Flüssigkeit 42, 42' umgeben ist. Die Außenhaut bildet auch hier ein dicht verschlossener, ringförmiger Hohlkörper 36, der aus einem Elastomer sein kann. Durch Anlegen eines dosierten elektrischen bzw. magnetischen Feldes wird durch Verändern der Viskosität der Flüssigkeit, d.h. über ein "Härterwerden" der Flüssigkeit die Schwingungsamplitude des eingelagerten Massekerns beeinflußt und somit die Schwingungseigenschaften des ganzen Systems verändert.

Für alle entsprechenden vorgestellten Ausführungsformen gilt, daß die Art und Anordnung der Elektroden oder Magnete, durch die die elektrorheologische oder magnetorheologische Flüssigkeit mit einem elektrischen oder magnetischen Feld beaufschlagt wird, hier nicht von Bedeutung und daher auch nicht im Einzelnen beschrieben ist.

## Patentansprüche

1. Vorrichtung zur Dämpfung von Schwingungen in einem Lenkrad, mit einem einen Dämpfungskörper enthaltenden Dämpfungsmittel (22) und einer mit dem Dämpfungsmittel (22) verbundenen Tilgermasse (18, 14, 40), **dadurch gekennzeichnet, daß** eine mit dem Dämpfungsmittel (22) gekoppelte, elektrische Steuereinheit (26) vorgesehen ist, die die mechanischen Schwingungseigenschaften der Vorrichtung (20; 20') so verändern kann, daß unterschiedliche Schwingungsfrequenzen gedämpft werden können, wobei zur Dämpfung der unterschiedlichen Schwingungsfrequenzen die Eigenfrequenz des Dämpfungskörpers (24) während des Betriebs durch die Steuereinheit (26) geändert werden kann.

2. Vorrichtung nach Anspruch 1, **dadurch gekennzeichnet, daß** das Dämpfungsmittel (22) so ausgelegt ist, daß sich die mechanischen Schwingungseigenschaften der Vorrichtung (20; 20') durch Zufuhr elektrischer Energie zum Dämpfungsmittel (22) verändern lassen.

3. Vorrichtung nach einem der vorhergehenden Ansprüche, **dadurch gekennzeichnet, daß** ein Sensor (28) vorgesehen ist, durch den die Steuereinheit (26) Daten über Schwingungen des Lenkrads (10) erhält.

4. Vorrichtung nach einem der Ansprüche 2 und 3, **dadurch gekennzeichnet, daß** das Dämpfungsmittel (22) ein Material enthält, das bei Zufuhr elektrischer Energie seine mechanischen Eigenschaften ändert.

5. Vorrichtung nach Anspruch 4, **dadurch gekennzeichnet, daß** das Material ein elektrisch leitfähiges Elastomer ist.

6. Vorrichtung nach Anspruch 4, **dadurch gekennzeichnet, daß** das Material eine elektrorheologische Flüssigkeit ist.

7. Vorrichtung nach einem der Ansprüche 1 bis 4, **dadurch gekennzeichnet, daß** das Dämpfungsmittel (22) einen Bimetallstreifen (32) enthält.

8. Vorrichtung nach einem der Ansprüche 1 bis 3, **dadurch gekennzeichnet, daß** das Dämpfungsmittel (22) einen den Dämpfungskörper (24) umgebenden Magneten (34) enthält.

9. Vorrichtung nach Anspruch 8, **dadurch gekennzeichnet, daß** der Magnet (34) ein Elektromagnet ist.

10. Vorrichtung nach einem der Ansprüche 8 und 9, **dadurch gekennzeichnet, daß** der Dämpfungskörper (24) ein elektrisch leitfähiges Elastomer enthält.

11. Vorrichtung nach einem der Ansprüche 8 und 9, **dadurch gekennzeichnet, daß** der Dämpfungskörper (24) eine magnetorheologische Flüssigkeit enthält.

12. Vorrichtung nach einem der vorhergehenden Ansprüche, **dadurch gekennzeichnet, daß** der Dämpfungskörper (24) ein Hohlkörper (36) aus elastischem Material ist.

13. Vorrichtung nach Anspruch 12, **dadurch gekennzeichnet, daß** der Hohlkörper (36) ringförmig ist.

14. Vorrichtung nach einem der Ansprüche 12 und 13, **dadurch gekennzeichnet, daß** sich in dem Hohlkörper (36) eine Tilgermasse aus einem Massekern (40) befindet.

15. Vorrichtung nach einem der Ansprüche 12 bis 14, **dadurch gekennzeichnet, daß** der Hohlkörper (36) eine elektrorheologische oder eine magnetorheologische Flüssigkeit (42, 42') enthält.

16. Vorrichtung nach einem der vorhergehenden Ansprüche, **dadurch gekennzeichnet, daß** die Tilgermasse ein Gasgenerator (18) ist.

17. Vorrichtung nach einem der Ansprüche 1 bis 15, **dadurch gekennzeichnet, daß** die Tilgermasse ein Gassack-Modul ist.

## Claims

1. A device for damping vibrations in a steering wheel, comprising a damping means (22) containing a damping body, and an attenuation mass (18, 14, 40) connected with the damping means (22), **characterized in that** an electrical control unit (26) is provided which is coupled to the damping means (22) and can alter the mechanical vibration characteristics of the device (20; 20') such that different vibration frequencies can be damped, the inherent frequency of the damping body (24) being adapted to be altered by the control unit (26) during operation for damping the different vibration frequencies.

2. The device according to Claim 1, **characterized in that** the damping means (22) is designed such that the mechanical vibration characteristics of the device (20; 20') can be altered by supplying electrical energy to the damping means (22).

3. The device according to either of the preceding claims, **characterized in that** a sensor (28) is provided, by means of which the control unit (26) receives data regarding vibrations of the steering wheel (10).

4. The device according to either of Claims 2 and 3, **characterized in that** the damping means (22) includes a material which alters its mechanical characteristics when supplied with electrical energy.

5. The device according to Claim 4, **characterized in that** the material is an electrically conductive elastomer.

6. The device according to Claim 4, **characterized in that** the material is an electrorheological fluid.

7. The device according to any of Claims 1 to 4, **characterized in that** the damping means (22) includes a bimetal strip (32).

8. The device according to any of Claims 1 to 3, **characterized in that** the damping means (22) includes a magnet (34) surrounding the damping body (24).

9. The device according to Claim 8, **characterized in that** the magnet (34) is an electromagnet.

10. The device according to either of Claims 8 and 9, **characterized in that** the damping body (24) contains an electrically conductive elastomer.

11. The device according to either of Claims 8 and 9, **characterized in that** the damping body (24) contains a magnetorheological fluid.

12. The device according to any of the preceding claims, **characterized in that** the damping body (24) is a hollow body (36) made of an elastic material.

13. The device according to Claim 12, **characterized in that** the hollow body (36) is ring-shaped.

14. The device according to either of Claims 12 and 13, **characterized in that** an attenuation mass made up of a mass core (40) is situated within the hollow body (36).

15. The device according to any of Claims 12 to 14, **characterized in that** the hollow body (36) contains an electrorheological or a magnetorheological fluid (42, 42').

16. The device according to any of the preceding claims, **characterized in that** the attenuation mass is a gas generator (18).

17. The device according to any of Claims 1 to 15, **characterized in that** the attenuation mass is a gas bag module.

## Revendications

1. Dispositif d'amortissement de vibrations dans un volant de direction, comportant un moyen amortisseur (22) contenant un corps amortissant et une masse d'atténuation (18, 14, 80) reliée au moyen amortisseur (22), **caractérisé en ce qu'**il est prévu une unité de commande (26) électrique accouplée au moyen amortisseur (22), laquelle peut modifier les propriétés de vibrations mécaniques du dispositif (20 ; 20') de telle sorte que différentes fréquences de vibrations peuvent être amorties, la propre fréquence du corps amortissant (24) pouvant être modifiée par l'unité de commande (26) pendant le fonctionnement pour amortir les différentes fréquences de vibration.

2. Dispositif selon la revendication 1, **caractérisé en ce que** le moyen amortisseur (22) est conçu de telle sorte que les propriétés de vibrations mécaniques du dispositif (20 ; 20') peuvent être modifiées en amenant de l'énergie électrique au moyen amortisseur (22).

3. Dispositif selon l'une des revendications précédentes, **caractérisé en ce qu'**il est prévu un capteur (28) par lequel l'unité de commande (26) reçoit des données concernant les vibrations du volant de direction (10).

4. Dispositif selon l'une des revendications 2 et 3, **caractérisé en ce que** le moyen amortisseur (22) contient un matériau qui modifie ses propriétés mécaniques à l'amenée d'énergie électrique.

5. Dispositif selon la revendication 4, **caractérisé en ce que** le matériau est un élastomère électroconducteur.

6. Dispositif selon la revendication 4, **caractérisé en ce que** le matériau est un liquide électrorhéologique.

7. Dispositif selon l'une des revendications 1 à 4, **caractérisé en ce que** le moyen amortisseur (22) contient une bande à bilame (32).

8. Dispositif selon l'une des revendications 1 à 3, **caractérisé en ce que** le moyen amortisseur (22) contient un aimant (34) entourant le corps amortissant (24).

9. Dispositif selon la revendication 8, **caractérisé en ce que** l'aimant (34) est un électroaimant.

10. Dispositif selon l'une des revendications 8 et 9, **caractérisé en ce que** le corps amortissant (24) contient un élastomère électroconducteur.

11. Dispositif selon l'une des revendications 8 et 9, **caractérisé en ce que** le corps amortissant (24) contient un liquide magnétorhéologique.

12. Dispositif selon l'une des revendications précédentes, **caractérisé en ce que** le corps amortissant (24) est un corps creux (36) en matériau élastique.

13. Dispositif selon la revendication 12, **caractérisé en ce que** le corps creux (36) est de forme annulaire.

14. Dispositif selon l'une des revendications 12 et 13, **caractérisé en ce qu'**une masse d'atténuation constituée par un noyau de masse (40) se trouve dans le corps creux (36).

15. Dispositif selon l'une des revendications 12 et 13, **caractérisé en ce que** le corps creux (36) contient un liquide (42, 42') électrorhéologique ou magnétorhéologique.

16. Dispositif selon l'une des revendications précédentes, **caractérisé en ce que** la masse d'atténuation est un générateur de gaz (18).

17. Dispositif selon l'une des revendications 1 à 15, **caractérisé en ce que** la masse d'atténuation est un module de coussin à gaz.
